# EUROPÄISCHE PATENTSCHRIFT

(11) **EP 3 827 165 B1**
(45) Veröffentlichungstag und Bekanntmachung des Hinweises auf die Patenterteilung: **07.06.2023**
(21) Anmeldenummer: 19744684.2
(22) Anmeldetag: 24.07.2019
(51) Int. Cl.: F02D 41/16, F02D 31/00, B60K 6/26, B60K 6/485, B60W 10/06, B60W 10/08, B60W 20/15, B60W 30/18, B60W 30/188

(54) **VERFAHREN ZUM BETREIBEN EINER LEERLAUFREGELVORRICHTUNG, LEERLAUFREGELVORRICHTUNG UND KRAFTFAHRZEUG**
METHOD FOR OPERATING AN IDLING CONTROL DEVICE, IDLING CONTROL DEVICE, AND MOTOR VEHICLE
PROCÉDÉ DE FONCTIONNEMENT D'UN DISPOSITIF DE RÉGLAGE DE RALENTI, DISPOSITIF DE RÉGLAGE DE RALENTI ET VÉHICULE AUTOMOBILE

(30) Priorität: 25.07.2018 DE 102018212358
(43) Veröffentlichungstag der Anmeldung: 02.06.2021
(73) Patentinhaber: Vitesco Technologies GmbH, 93055 Regensburg (DE)
(72) Erfinder: JEHLE, Martin, 81737 München (DE); WARD, Matthew, 81737 München (DE)
(74) Vertreter: Vitesco Technologies
(86) Internationale Anmeldenummer: PCT/EP2019/069877
(87) Internationale Veröffentlichungsnummer: WO 2020/020926

(56) Entgegenhaltungen:
- EP-A1- 2 873 576
- DE-A1- 19 704 153
- DE-A1-102007 059 869
- DE-A1-102009 047 618
- US-A1- 2011 041 802

## Beschreibung

Die Erfindung betrifft ein Verfahren zum Betreiben einer Leerlaufregelvorrichtung für ein Kraftfahrzeug, die Leerlaufvorrichtung und ein mit der Leerlaufvorrichtung ausgestattetes Kraftfahrzeug.

Die Drehzahlregelung des Verbrennungsmotors im Leerlauf (auch Leerlaufregelvorrichtung genannt) ist besonders beim Ottomotor, und unter Umständen aber auch beim Dieselmotor ein anspruchsvolles regelungstechnisches Problem, weil die eingesetzten Stellgrößen des Verbrennungsmotors Limitierungen unterliegen. Die Regelung erfolgt im Allgemeinen auf Momentenbasis, um unabhängiger von den Einflussgrößen des Moments und deren Zusammenspiel zu sein. Bei den Einflussgrößen kann es sich beispielsweise um die Luftmasse, den Zündwinkel und dem Lambdawert bei einem Ottomotor handeln. Bei den Einflussgrößen des Dieselmotors kann es sich um eine Einspritzmenge und dem Muster der Einspritzung handeln. Der Leerlaufregler gibt dabei eine oder mehrere Momentenanforderungen aus, welche in unterschiedliche Stellen der Momentenkoordination eingehen können. Dabei kann es sich um additiv wirkende Momentenanforderungen oder ein gefordertes Minimalmoment handeln. Diese können auf unterschiedliche Stellgrößen wirken. Es wird unterschieden zwischen dem sogenannten schnellen Pfad und dem langsamen Pfad.

Der schnelle Pfad bezieht sich beim Ottomotor meist auf den Zündwinkel und bei dem Dieselmotor auf eine Einspritzmenge. Der sogenannte langsame Pfad erfolgt über eine Beeinflussung der Luftmenge und des Ladedrucks oder andere Stellgrößen mit einer höheren Verzögerung oder einer geringeren zeitlichen Änderungsrate. Der schnelle Pfad kann hierbei obere bzw. untere Grenzen für das realisierbare Moment erreichen:
a) Ottomotor: Die obere Grenze wird durch das sogenannte Basismoment vorgegeben, welches von dem frühestmöglichen Zündzeitpunkt abhängt. Die untere Grenze wird durch die Brenngrenze beziehungsweise thermische Grenzen, welche von dem spätestmöglichen Zündzeitpunkt abhängen gebildet. Die Grenzen beziehen sich jeweils auf die aktuell in dem Motor aufgenommene Füllung (z.B. mg/Hub), welche nur mit Verzögerung oder einer geringeren zeitlichen Änderungsrate verändert werden kann.
b) Dieselmotor: Die obere Grenze wird durch die Rußgrenze vorgegeben, welche abhängt von der höchsten Einspritzmenge in Hinblick auf Emissionen etc.). Die untere Grenze wird durch eine minimale Einspritzmenge zum Vermeiden von "blauem" Ruß vorgegeben. "Blauer" Ruß tritt bei schlechter Verbrennung insbesondere bei geringem Umgebungsdruck und einem kalten Motor durch eine lange Verzögerung des Verbrennungsbeginns auf.

Während im Leerlauf die Grenzen des Dieselmotors nur unter besonderen Bedingungen erreicht werden, hat die obere Grenze beim Ottomotor stets eine hohe Bedeutung, da nur mit geringem Abstand von dieser Grenze (sog. Momentenreserve) ein geringer Kraftstoffverbrauch erreichbar ist.

Ein solch geringer Abstand reduziert jedoch die Möglichkeit zu schnellen momentenerhöhenden Eingriffen bei Störungen, welche beispielsweise bei plötzlich wirksamen mechanisch gekoppelten Verbrauchern wie dem Klimakompressor auftreten können. Die Leerlaufregelvorrichtung wird dabei bei Ottomotoren im Allgemeinen mit einer Momentenreserve betrieben, welche eine erhebliche Verbrauchserhöhung im Leerlauf bewirken kann.

Die Momentenreserve im Leerlauf hat andererseits den Vorteil, dass sie die Füllung des Verbrennungsmotors erhöht, wodurch insbesondere bei reibungsoptierten Motoren erst eine stabile Verbrennung möglich wird. Ohne eine Momentenreserve kann eine instabile Verbrennung erfolgen.

Elektromotoren können in Hybridsystemen aufgrund ihrer hohen Reaktionsgeschwindigkeit vorteilhaft zur Leerlaufregelvorrichtung eingesetzt werden. Das schnell wirksame positive Moment eines Elektromotors eignet sich neben der reinen Leerlaufregelvorrichtung ebenfalls für die Unterstützung in Anfahrsituationen sowie in Situationen mit drohendem Motorabsterben. Andererseits sind gerade positive Momenteneingriffe durch Elektromotoren mit hohem energetischem Aufwand verbunden, weil die hierfür erforderliche elektrische Energie, außer beim Plug-In Hybrid, zuerst unter Berücksichtigung der Wirkungsgradkette aus der Energie des Kraftstoffes erzeugt werden muss. Insbesondere bei Mild - oder Micro Hybrid Systemen ist das verfügbare Moment des Elektromotors darüber hinaus begrenzt. Dies ist insbesondere bei einem niedrigen Batterieladezustand der Fall, so dass eine vollständige Regelung des Leerlaufs über den Elektromotor nicht immer möglich ist.

Ein Verfahren zum Betreiben einer Leerlaufregelvorrichtung gemäß dem Oberbegriff des Anspruchs 1 ist aus den Offenlegungsschriften DE 10 2007 059869 A1, EP 2 873 576 A1, DE 10 2009 047618 A1, US 2011/ 041802 A1 und DE 197 04 153 A1 bekannt.

Es ist eine Aufgabe der Erfindung ein verbessertes Verfahren zur Leerlaufregelung bereitzustellen.

Durch die Erfindung wird ein Verfahren zum Betreiben einer Leerlaufregelvorrichtung für ein Kraftfahrzeug bereitgestellt. Durch die Leerlaufregelvorrichtung wird ein Gesamtsolldrehmoment, umfassend ein Solldrehmoment eines Elektromotors und ein Solldrehmoment eines mit dem Elektromotor zusammenwirkenden Verbrennungsmotors festgelegt. Die Solldrehmomente werden mittels jeweiliger Regelungspfade durch die Leerlaufregelvorrichtung in dem Elektromotor und dem Verbrennungsmotor eingeregelt.

In einem ersten Betriebsmodus wird durch die Leerlaufregelvorrichtung ein angefordertes Gesamtsolldrehmoment mittels zumindest eines Regelungseingriffs nur über den Regelungspfad des Verbrennungsmotors eingeregelt.

In einem zweiten Betriebsmodus wird durch die Leerlaufregelvorrichtung das angeforderte Gesamtsolldrehmoment mittels zumindest eines Regelungseingriffs über den Regelungspfad des Verbrennungsmotors und mittels zumindest eines Regelungseingriffs über den Regelungspfad des Elektromotors eingeregelt. Der zumindest eine Regelungseingriff über den Regelungspfad des Verbrennungsmotors umfasst zumindest einen vorbestimmten langsamen Regelungseingriff und der zumindest eine Regelungseingriff in den Regelungspfad des Elektromotors zumindest einen vorbestimmten schnellen Regelungseingriff. Der zumindest eine vorbestimmte schnelle Regelungseingriff greift mit einer höheren zeitlichen Änderungsrate ein, als der zumindest eine vorbestimmte langsame Regelungseingriff.

Mit anderen Worten wird ein Verfahren für die Leerlaufregelvorrichtung zum Einregeln des Gesamtsolldrehmoments bereitgestellt. Die Leerlaufregelvorrichtung legt das Gesamtsolldrehmoment fest, welches sich aus dem Solldrehmoment des Elektromotors und dem Solldrehmoment eines Verbrennungsmotors zusammensetzt. Zum Einstellen des Gesamtsolldrehmoments werden das Solldrehmoment des Elektromotors mittels des Regelungspfads des Elektromotors und das Solldrehmoment des Verbrennungsmotors mittels des Regelungspfads des Verbrennungsmotors eingeregelt.

Um in dem ersten Betriebsmodus das angeforderte Gesamtsolldrehmoment einzuregeln, erfolgt der zumindest eine Regelungseingriff durch die Leerlaufregelvorrichtung nur über den Regelungspfad des Verbrennungsmotors. Somit wird das angeforderte Gesamtsolldrehmoment nur durch einen Regelungseingriff über den Regelungspfad des Verbrennungsmotors eingestellt. Dadurch wird ein anderes Solldrehmoment des Verbrennungsmotors eingestellt, welches zusammen mit dem Solldrehmoment des Elektromotors das angeforderte Gesamtsolldrehmoment ergibt.

Um in dem zweiten Betriebsmodus das angeforderte Gesamtsolldrehmoment einzuregeln, erfolgt der zumindest eine Regelungseingriff über den Regelungspfad des Verbrennungsmotors, wobei dieser den zumindest einen langsamen Regelungseingriff umfasst. Zudem erfolgt auch der zumindest eine Regelungseingriff über den Regelungspfad des Elektromotors, wobei dieser den zumindest einen schnellen Regelungseingriff umfasst. Somit erfolgt die Einstellung des angeforderten Gesamtdrehmoments zumindest über den einen langsamen Regelungseingriff über den Regelungspfad des Verbrennungsmotors und dem zumindest einen schnellen Regelungseingriff über den Regelungspfad des Elektromotors. Der zumindest eine schnelle Regelungseingriff wirkt dabei mit einer höheren zeitlichen Änderungsrate auf das Gesamtdrehmoment als der zumindest eine langsame Regelungseingriff. Das angeforderte Gesamtsolldrehmoment wird somit durch eine Änderung des Solldrehmoments des Verbrennungsmotors und des Solldrehmoments des Elektromotors eingestellt.

Durch die Erfindung ergibt sich der Vorteil, dass die Leerlaufregelvorrichtung in zwei verschiedenen Betriebsmodi betrieben werden kann.

So ist es beispielsweise möglich, dass durch die Leerlaufregelvorrichtung das Gesamtsolldrehmoment bestimmt wird. Die Leerlaufregelvorrichtung kann beispielsweise einen Mikroprozessor oder einen Mikrocontroller umfassen. Das Gesamtsolldrehmoment kann sich aus dem Solldrehmoment des Elektromotors und dem Solldrehmoment des Verbrennungsmotors zusammensetzen. Der Elektromotor und der Verbrennungsmotor können beispielsweise in einer Hybridanordnung in einem Kraftfahrzeug zusammenwirken und beispielsweise eine Kurbelwelle antrieben. Der Verbrennungsmotor kann beispielsweise ein Ottomotor oder ein Dieselmotor sein. Die Leerlaufregelvorrichtung kann dazu eingerichtet sein, ein aktuelles Istgesamtdrehmoment, beispielsweise das einer Kurbelwelle, mittels eines Sensors zu erfassen. Die Leerlaufregelvorrichtung kann dazu eingerichtet sein, ein jeweiliges Istdrehmoment des Verbrennungsmotors und des Elektromotors zu empfangen oder zu erfassen. Über jeweilige Regelungspfade kann die Leerlaufregelvorrichtung die jeweiligen Solldrehmomente des Verbrennungsmotors und des Elektromotors einregeln. Es kann vorgesehen sein, dass das Solldrehmoment des Verbrennungsmotors beispielsweise über Regelungspfade zur Regelung einer Füllung eines Zylinders, eines Zündzeitpunkts oder einer Einspritzmenge eingeregelt wird. Die Regelung des Elektromotors kann beispielsweise über einen Regelungspfad einer Betriebsspannung erfolgen. Das angeforderte Gesamtdrehmoment kann beispielsweise ein Gesamtdrehmoment sein, welches angefordert wird und sich von dem Gesamtsolldrehmoment zu Beginn des Verfahrens unterscheidet. Das angeforderte Gesamtdrehmoment kann mittels Regelungseingriffe in die Regelungspfade des Elektromotors und des Verbrennungsmotors eingeregelt werden. Die Regelungseingriffe können schnelle und langsame Regelungseingriffe umfassen, wobei die schnellen Regelungseingriffe (z.B. proportionale oder differenzierende Regleranteile) im allgemeinen in einer kurzen Zeitspanne eine höhere Veränderung des Solldrehmoments bewirken als die langsamen Regelungseingriffe (z.B. integrierende Regleranteile) . Im Fall des Verbrennungsmotors können die Regelungseingriffe über einen schnellen oder langsamen Regelungspfad umgesetzt werden. Der schnelle Regelungspfad wirkt beispielsweise auf eine Änderung des Zündwinkels oder der Einspritzmenge in den Zylinder. Der langsame Regelungspfad wirkt sich beispielsweise auf einen Ladedruck aus und weist eine größere Verzögerung oder eine geringere zeitliche Änderungsrate auf, bis Reglereingriffe das Gesamtdrehmoment verändern. Der schnelle Regelungseingriff kann z.B. der PD-Anteil eines Reglers sein, der langsame Regelungseingriff der I-Anteil. Beide Anteile können unmittelbar beginnen, den Momentensollwert zu verändern. Ein PD-Anteil kann in kürzerer Zeit im Allgemeinen eine höhere Momentenänderung bewirken als ein I-Anteil.

Die Leerlaufregelvorrichtung kann das Gesamtdrehmoment berechnen und einregeln, welches beispielsweise niedriger ist als ein angefordertes Gesamtdrehmoment. Um das angeforderte Gesamtdrehmoment zu erreichen, kann die Leerlaufregelvorrichtung Regelungseingriffe vornehmen, wobei beispielsweise Stellgrößen in einem Regelungspfad, wie beispielsweise der Zündwinkel verändert werden können.

Die Leerlaufregelvorrichtung kann in zwei Betriebsmodi betrieben werden. In dem ersten Betriebsmodus kann es vorgesehen sein, dass das angeforderte Gesamtsolldrehmoment nur mittels Regelungseingriffen über den Regelungspfad des Verbrennungsmotors eingeregelt wird. Die Regelungseingriffe in dem Regelungspfad des Verbrennungsmotors können die langsamen Regelungseingriffe und die schnellen Regelungseingriffe umfassen.

In dem zweiten Betriebsmodus kann es vorgesehen sein, dass das angeforderte Gesamtsolldrehmoment mittels des zumindest einen Regelungseingriffs über den Regelungspfad des Verbrennungsmotors und mittels des zumindest einen Regelungseingriffs über den Regelungspfad des Elektromotors erfolgt. Dabei kann es vorgesehen sein, dass der zumindest eine Regelungseingriff in den Regelungspfad des Verbrennungsmotors zumindest einen langsamen Regelungseingriff umfasst und der zumindest eine Regelungseingriff in den Regelungspfad des Elektromotors zumindest den einen vorbestimmten schnellen Regelungseingriff. Es kann beispielsweise vorgesehen sein, dass im zweiten Betriebsmodus der zumindest eine schnelle Regelungseingriff über den Regelungspfad des Elektromotors erfolgt und der zumindest eine langsame Regelungseingriff über den Regelungspfad des Verbrennungsmotors. Es kann somit im zweiten Betriebsmodus ein koordinierter Einsatz von Regelungseingriffen erfolgen, wobei Regelungseingriffe mit einer geringeren Änderungsrate über den Verbrennungsmotor umgesetzt werden und Regelungseingriffe mit einer höheren Änderungsrate, welche eine hohe Dynamik erfordern, über den Elektromotor. Somit kann es möglich sein, einen energieeffizienten Betriebsmodus mit schnellen Regelungseingriffen ohne Momentenreserve zu ermöglichen.

Im zweiten Betriebsmodus weist das Solldrehmoment des Elektromotors mindestens ein vorbestimmtes Grundgeneratormoment auf und das Solldrehmoment des Verbrennungsmotors weist mindestens das Grundgeneratormoment als Solldrehmoment auf, wenn sich das Kraftfahrzeug in einem vorbestimmten Leerlaufmodus befindet.

Mit anderen Worten ist es vorgesehen, dass im zweiten Betriebsmodus durch den Elektromotor mindestens das vorbestimmte Grundgeneratormoment aufgenommen wird. Entsprechend dem durch den Elektromotor aufgenommenen Grundgeneratormoment wird durch den Verbrennungsmotor das Solldrehmoment bereitgestellt, welches mindestens das Grundgeneratormoment umfasst. Dies erfolgt, wenn sich das Kraftfahrzeug in dem vorbestimmten Leerlaufmodus befindet.

Dadurch ergibt sich der Vorteil, dass mittels der Einstellung eines Grundgeneratormoments und einer entsprechenden Einstellung des Solldrehmoments des Verbrennungsmotors, ein stabiler Motorlauf ermöglicht wird, wobei gleichzeitig elektrische Energie durch den Elektromotor bereitgestellt wird.

Es kann sein, dass ein stabiler Betrieb des Verbrennungsmotors nur bei einem bestimmten Drehmoment möglich ist. Um den stabilen Betrieb des Verbrennungsmotors bei dem Gesamtsolldrehmoment zu ermöglichen, kann es vorgesehen sein, das Solldrehmoment des Verbrennungsmotors auf einen Wert einzuregeln, welcher größer sein kann als das Gesamtdrehmoment. Um das Gesamtdrehmoment bereitzustellen, kann es somit erforderlich sein, das Solldrehmoment des Verbrennungsmotors mit einem negativen Drehmoment zu kombinieren. Das negative Drehmoment kann dabei durch den Elektromotor bereitgestellt werden. Dazu kann der Elektromotor in dem zweiten Betriebsmodus als elektrischer Generator betrieben werden und das Grundgeneratormoment aufnehmen. Das Solldrehmoment des Elektromotors kann so gewählt sein, dass zumindest das vorbestimmte Grundgeneratormoment durch den Elektromotor aufgenommen wird. Dies kann beispielsweise erfolgen, wenn sich das Kraftfahrzeug in dem vorbestimmten Leerlaufmodus befindet. Der vorbestimmte Leerlaufmodus kann eine vorbestimmte Stellung des Gaspedals oder einer Kupplung des Kraftfahrzeugs sein.

Eine Weiterbildung der Erfindung sieht vor, dass der Verbrennungsmotor im ersten Betriebsmodus mit einer vorbestimmten ersten Momentenreserve betrieben wird, und der Verbrennungsmotor im zweiten Betriebsmodus ohne eine Momentenreserve oder mit einer vorbestimmten zweiten Momentenreserve betrieben wird, wobei die vorbestimmte zweite Momentenreserve kleiner ist als die vorbestimmte erste Momentenreserve.

Mit anderen Worten ist es vorgesehen, dass der Verbrennungsmotor durch die Leerlaufregelvorrichtung derart gesteuert wird, dass der Verbrennungsmotor eine vorbestimmte Momentenreserve aufweist. Dabei ist es vorgesehen, dass der Verbrennungsmotor in dem ersten Betriebsmodus die erste Momentenreserve aufweist, und im zweiten Betriebsmodus die zweite Momentenreserve oder keine Momentenreserve aufweist. Die Momentenreserve des Verbrennungsmotors im ersten Betriebsmodus ist dabei größer als die Momentenreserve des Verbrennungsmotors im zweiten Betriebsmodus.

Dadurch ergibt sich der Vorteil, dass es ermöglicht ist, den Verbrennungsmotor sowohl mit einer Momentenreserve, als auch ohne Momentenreserve zu betreiben. Letzteres ermöglicht einen energieeffizienteren Betrieb des Verbrennungsmotors.

Es kann beispielsweise vorgesehen sein, dass die Momentenreserve des Verbrennungsmotors im ersten Betriebsmodus durch einen Füllungsüberschuss in Kombination mit einem späten Zündzeitpunkt bereitgestellt wird und der Verbrennungsmotor im zweiten Betriebsmodus mit einem für eine aktuelle Füllung optimalen Zündzeitpunkt betrieben wird. Somit kann der Verbrennungsmotor in dem ersten Betriebsmodus mit einem größeren Abstand zu einer oberen Grenze betrieben werden als im zweiten Betriebsmodus. In dem zweiten Betriebsmodus kann die geringere Momentenreserve durch den Elektromotor ausgeglichen werden.

Eine Weiterbildung der Erfindung sieht vor, dass durch die Leerlaufregelvorrichtung das vorbestimmte Grundgeneratormoment in Abhängigkeit eines vorbestimmten Sollarbeitspunkt des Verbrennungsmotors bestimmt wird.

Mit anderen Worten wird das Generatormoment durch die Leerlaufregelvorrichtung so eingestellt, dass der Verbrennungsmotor an einem vorbestimmten Sollarbeitspunkt betrieben wird.

Dadurch ergibt sich der Vorteil, dass es möglich ist, für das angeforderte Sollgesamtdrehmoment einen Arbeitspunkt des Verbrennungsmotors auszuwählen.

Der Verbrennungsmotor kann beispielsweise eine Charakteristik aufweisen, welche einen ruhigen, leisen oder beispielsweise energieeffizienten Betrieb an bestimmten Arbeitspunkten aufweist. Es kann möglich sein, dass der vorbestimmte Arbeitspunkt nur bei bestimmten Werten des Drehmoments des Verbrennungsmotors erreicht werden kann. Kennkurven oder Kennfelder, welche die Arbeitspunkte des Verbrennungsmotors in Abhängigkeit des Drehmoments und sonstigen Parametern des Verbrennungsmotors angeben, können in der Leerlaufregelvorrichtung gespeichert sein. Ist der Betrieb des Verbrennungsmotors an einem vorbestimmten Arbeitspunkt erforderlich, kann es vorgesehen sein, dass die Leerlaufregelvorrichtung das erforderliche Solldrehmoment des Verbrennungsmotors für den vorbestimmten Arbeitspunkt aus der Kennkurve oder dem Kennfeld ausliest. Aus dem Solldrehmoment des Verbrennungsmotors und dem angeforderten Gesamtsolldrehmoment kann die Leerlaufregelvorrichtung ein Generatormoment berechnen, welcher in Kombination mit dem Solldrehmoment des Verbrennungsmotors das angeforderte Gesamtsolldrehmoment bereitstellt.

Eine Weiterbildung der Erfindung sieht vor, dass der Verbrennungsmotor im ersten Betriebsmodus und im zweiten Betriebsmodus mit einer gleichen Füllmenge pro Verbrennungszyklus betrieben wird, wenn sich das Kraftfahrzeug in dem vorbestimmten Leerlaufmodus befindet.

Mit anderen Worten wird ein Zylinder des Verbrennungsmotors sowohl im ersten Betriebsmodus als auch im zweiten Betriebsmodus die gleiche Füllmenge zugeführt, wenn sich das Kraftfahrzeug in dem vorbestimmten Leerlaufmodus befindet.

Eine Weiterbildung der Erfindung sieht vor, dass durch die Leerlaufregelvorrichtung ein Sollladezustand eines elektrischen Energiespeichers festgelegt wird, wobei der Sollladezustand in dem zweiten Betriebsmodus höher ist als im ersten Betriebsmodus.

Mit anderen Worten stellt die Leerlaufregelvorrichtung einen Sollladezustand in einem elektrischen Energiespeicher ein. Der Sollladezustand wird dabei durch die Leerlaufregelvorrichtung in Abhängigkeit von dem Betriebsmodus ausgewählt. In dem zweiten Betriebsmodus weist der Sollladezustand dabei einen höheren Wert auf als in dem ersten Betriebsmodus.

Dadurch ergibt sich der Vorteil, dass der Energiespeicher in dem zweiten Betriebsmodus eine größere Menge an Energie aufnehmen kann, wodurch ein längerer Betrieb der Leerlaufregelvorrichtung im zweiten Betriebsmodus ermöglicht wird.

Es kann beispielsweise vorgesehen sein, dass im zweiten Betriebsmodus eine Niederspannungsbatterie als elektrischer Energiespeicher aus einem Hochvoltsystem auf einen höheren Ladezustand aufgeladen wird, als im ersten Betriebsmodus. Dies kann insbesondere erfolgen, wenn der Ladezustand des Hochvoltsystems eine vorbestimmte Schwelle überschreitet. Dies kann ein Energiemanagementaspekt darstellen, denn wenn der Ladezustand einer Hochspannungsbatterie zu sehr ansteigt, kann ein Aufladen einer 12 V Batterie getriggert werden, um zu vermeiden, dass die Leerlaufregelvorrichtung wieder in den ersten Betriebsmodus aufgrund fehlender Speicherreserven zurückschalten muss.

Eine Weiterbildung der Erfindung sieht vor, dass dem ersten Betriebsmodus und dem zweiten Betriebsmodus jeweilige vorbestimmte Betriebszustände des Kraftfahrzeugs zugewiesen sind, und die Leerlaufregelvorrichtung in Abhängigkeit von den vorbestimmten Betriebszuständen des Kraftfahrzeugs im ersten Betriebsmodus oder im zweiten Betriebsmodus arbeitet.

Mit anderen Worten wird der jeweilige zugewiesene Betriebsmodus durch die Leerlaufregelvorrichtung ausgewählt, wenn sich das Kraftfahrzeug in dem jeweiligen vorbestimmten Betriebszustand befindet. Dabei sind sowohl dem ersten Betriebsmodus als auch dem zweiten Betriebsmodus jeweilige vorbestimmte Betriebszustände des Kraftfahrzeugs zugewiesen. Die Leerlaufregelvorrichtung arbeitet dann entsprechend dem gewählten Betriebsmodus.

Dadurch ergibt sich der Vorteil, dass jeweiligen Betriebszuständen des Kraftfahrzeugs der jeweils bevorzugte Betriebsmodus zugewiesen werden kann.

Es kann beispielsweise vorgesehen sein, dass die vorbestimmten Betriebszustände des Kraftfahrzeugs einen vorbestimmten Ladezustand eines oder mehrerer elektrischer Energiespeicher umfassen. Es kann vorgesehen sein, dass die Leerlaufregelvorrichtung im zweiten Betriebsmodus arbeitet, wenn der Ladezustand eines oder mehrerer elektrischer Energiespeicher des Kraftfahrzeugs innerhalb eines vorbestimmten Bereiches liegt. Ein weiterer Betriebszustand des Kraftfahrzeugs kann beispielsweise ein Betrieb von Nebenaggregaten sein. Es kann beispielsweise vorgesehen sein, dass die Leerlaufregelvorrichtung im zweiten Betriebsmodus arbeitet, wenn eine vorbestimmte Momentenabgabe des Verbrennungsmotors für den Betrieb eines oder mehrerer mechanisch angetriebener Nebenaggregate und/oder für die Versorgung elektrischer Verbraucher über den Elektromotor erforderlich ist. Bei dem mechanisch angetriebenen Aggregat kann es sich beispielsweise um einen Klimakompressor einer Klimaanlage handeln. Ein weiterer Betriebszustand des Kraftfahrzeugs kann ein vorbestimmter Zustand eines Abgasbehandlungssystems sein. Es kann vorgesehen sein, dass die Leerlaufregelvorrichtung nur im zweiten Betriebsmodus arbeitet, wenn keine erhöhte Abgastemperatur für das Aufheizen eines Abgasbehandlungssystems erforderlich ist. Der zweite Betriebsmodus kann auch vorbestimmten Zuständen des Antriebsstrangs zugeordnet sein. Es kann vorgesehen sein, dass der 2. Betriebsmodus nur in vorbestimmten Zuständen des Antriebsstrangs es aktiviert wird. Dies kann beispielsweise bei einem offenen Antriebsstrang oder definierten Gängen der Fall sein. Es kann vorgesehen sein, dass der zweite Betriebsmodus nur aktiviert wird, wenn seit dem Start des Verbrennungsmotors eine vorbestimmte Zeit abgelaufen ist. Es kann vorgesehen sein, dass eine Aktivierung des zweiten Betriebsmodus nur zu Beginn einer Aktivierungsphase der Leerlaufregelvorrichtung erfolgt. Dies kann möglich spürbare Auswirkungen beim Übergang zwischen den Betriebsmodi minimieren.

Eine Weiterbildung der Erfindung sieht vor, dass der zweite Betriebsmodus aktiviert wird oder aktiv gehalten wird, wenn eine vorbestimmte Anfahrsituation des Kraftfahrzeugs und/oder eine vorbestimmte Situation eines bevorstehen Ausgehens des Verbrennungsmotors erkannt wird.

Mit anderen Worten ist es vorgesehen, dass die Leerlaufregelvorrichtung in dem zweiten Betriebsmodus betrieben wird, wenn die vorbestimmte Anfahrsituationen des Kraftfahrzeugs und/oder eine vorbestimmte Situation eines bevorstehenden ausgehend des Verbrennungsmotors erkannt wird.

Dadurch ergibt sich der Vorteil, dass der Verbrennungsmotor in Situationen in denen dieser ein zu geringes Drehmoment aufweist entlastet wird.

Es kann beispielsweise vorgesehen sein, dass mittels eines Sensors durch ein Messen einer Gaspedalstellung, die vorbestimmte Anfahrsituation des Kraftfahrzeugs erfasst wird, wodurch die Leerlaufregelvorrichtung in den zweiten Betriebsmodus gestellt wird oder verbleibt. Es kann auch vorgesehen sein, dass die Leerlaufregelvorrichtung in den zweiten Betriebsmodus gestellt wird, wenn die vorbestimmte Situation eines bevorstehenden Ausgehens des Verbrennungsmotors erkannt wird. Die vorbestimmte Situation eines bevorstehenden Ausgehen des Verbrennungsmotors kann beispielsweise ein Unterschreiten einer vorbestimmten Drehzahl sein.

Eine Weiterbildung der Erfindung sieht vor, dass durch die Leerlaufregelvorrichtung Parameter verwendet werden, welche abhängig sind von dem jeweiligen Betriebsmodus.

Mit anderen Worten sind dem ersten Betriebsmodus und dem zweiten Betriebsmodus jeweilige Parameter zugewiesen, welche durch die Leerlaufregelvorrichtung verwendet werden, wenn der jeweilige Betriebsmodus aktiv ist.

Dadurch ergibt sich der Vorteil, dass der Elektromotor und der Verbrennungsmotor mit Parametern angesteuert werden, welche auf den jeweiligen Betriebsmodus angepasst sind.

So kann es beispielsweise vorgesehen sein, dass dem ersten Betriebsmodus und dem zweiten Betriebsmodus jeweils unterschiedliche Werte zugeordnet sind. In dem ersten Betriebsmodus können dann beispielsweise andere Reglerkonstanten oder Reglerkennfelder eines proportionalen, differenzierenden und/oder integrierenden Regleranteils verwendet werden als in dem zweiten Betriebsmodus.

Eine Weiterbildung der Erfindung sieht vor, dass die Leerlaufregelvorrichtung bei einem Wechsel des Betriebsmodus in einem vorbestimmten Übergangsmodus betrieben wird, wobei sich die von der Leerlaufregelvorrichtung verwendeten Werte der Momentenreserve und/oder der Parameter stetig von denen des ursprünglichen Betriebsmodus zu denen des folgenden Betriebsmodus ändern. Zusätzlich oder alternativ dazu werden Regelungseingriffe mittels jeweiliger Aktivitätsfaktoren multipliziert, wobei sich die Aktivitätsfaktoren stetig von denen des ursprünglichen Betriebsmodus zu denen des folgenden Betriebsmodus ändern.

Mit anderen Worten wird die Leerlaufregelvorrichtung in einem vorbestimmten Übergangsmodus betrieben, wenn die Leerlaufregelvorrichtung von einem Betriebsmodus in den anderen Betriebsmodus wechselt. Während des Übergangsmodus werden durch die Leerlaufregelvorrichtung Werte der Momentenreserve und/oder der Parameter verwendet, welche sich stetig ändern. Die Änderung erfolgt dabei durch einen stetigen Übergang der Werte ausgehend von den Werten des vor dem Wechsel eingestellten Betriebsmodus zu den Werten des nach dem Wechsel eingestellten Betriebsmodus. Zusätzlich oder alternativ dazu erfolgt die stetige Änderung der Regelungseingriffe, wobei ein stetiger Übergang der Regelungseingriffe mittels jeweiliger Aktivitätsfaktoren erfolgt, welche mit den Regelungseingriffen multipliziert werden. Während des Übergangsmodus ändern sich die Werte der jeweiligen Aktivitätsfaktoren stetig von denen des ursprünglichen Betriebsmodus zu denen des folgenden Betriebsmodus.

Dadurch ergibt sich der Vorteil, dass abrupte Änderungen während eines Wechsels des Betriebsmodus verhindert werden.

Es kann beispielsweise vorgesehen sein, dass während des Verfahrens ein Wechsel von dem ersten Betriebsmodus in den zweiten Betriebsmodus durch die Leerlaufregelvorrichtung durchgeführt wird. Die Leerlaufregelvorrichtung kann den Betrieb im ersten Betriebsmodus beenden und in dem Übergangsmodus fortsetzen. Der Übergangsmodus kann sich über einen vorbestimmten Zeitraum erstrecken. Während des Zeitraums können Werte betreffend die Momentenreserve und/oder die Parameter in Abhängigkeit der Zeit von den Werten des ersten Betriebsmodus zu den Werten des zweiten Betriebsmodus stetig überführt werden. Am Ende des Übergangsmodus können die Werte betreffend die Momentenreserve und/oder die Parameter mit denen des zweiten Betriebsmodus übereinstimmen. Daraufhin kann der Übergangsmodus beendet und der zweite Betriebsmodus aktiviert werden. In dem Übergangsmodus kann ein stetiger Übergang eines Aktivitätszustands der jeweiligen Regelungseingriffe erfolgen. Dabei kann es vorgesehen sein, dass Aktivieren oder Deaktivieren der Regelungseingriffe erfolgen, welche nur in einem der beiden Betriebsmodi aktiv sind.

Eine Weiterbildung der Erfindung sieht vor, dass die Leerlaufregelvorrichtung die schnellen Regelungseingriffe im zweiten Betriebsmodus zeitsynchron und im ersten Betriebsmodus winkelsynchron mit einem Winkel eines Antriebsmoments des Kraftfahrzeugs berechnet werden.

Mit anderen Worten erfolgen die schnellen Regelungseingriffe im zweiten Betriebsmodus durch die Leerlaufregelvorrichtung mit einer konstanten zeitlichen Wiederholrate und im ersten Betriebsmodus mit einer konstanten Wiederholrate in Abhängigkeit des Winkels der des Antriebselements.

Dadurch ergibt sich der Vorteil, dass die Berechnungsabstände auf den Betriebsmodus optimiert werden können.

Es kann beispielsweise vorgesehen sein, dass die Berechnung der schnellen Regelungseingriffe im zweiten Betriebsmodus beispielsweise mit einer konstanten Wiederholrate, beispielsweise 1 Berechnung pro 10 ms, erfolgen kann. Im ersten Betriebsmodus kann die Berechnung winkelsynchron mit dem Winkel eines Antriebselements des Kraftfahrzeugs berechnet werden. Das Antriebselement kann beispielsweise eine Kurbelwelle oder eine Radachse sein. Dabei kann die Wiederholrate proportional zur Drehzahl des Verbrennungsmotors, insbesondere mit einer segmentsynchronen Berechnung der schnellen Regelungseingriffe durchgeführt werden. Dabei kann die Dauer eines Arbeitsspieles des Verbrennungsmotors beispielsweise 2 Umdrehungen pro Zylinderanzahl sein. Ein Segment kann hierbei der Zeitdauer für 2 Umdrehungen des Verbrennungsmotors geteilt durch die Zylinderanzahl entsprechen.

Eine Weiterbildung der Erfindung sieht vor, dass durch die Leerlaufregelvorrichtung im zweiten Betriebsmodus ein proportionaler und/oder differenzierender Anteil über den zumindest einen Regelungseingriff in den Regelungspfad des Elektromotors umgesetzt wird.

Mit anderen Worten erfolgt durch die Leerlaufregelvorrichtung im zweiten Betriebsmodus eine proportionale und/oder differenzierende Regelung über den zumindest einen Regelungseingriff in den Regelungspfad des Elektromotors.

Eine Weiterbildung der Erfindung sieht vor, dass durch die Leerlaufregelvorrichtung im zweiten Betriebsmodus ein integrierender Anteil über den zumindest einen Regelungseingriff in den Regelungspfad des Verbrennungsmotors umgesetzt wird.

Mit anderen Worten erfolgt im zweiten Betriebsmodus durch die Leerlaufregelvorrichtung eine integrierende Regelung über den zumindest einen Regelungseingriff in den Regelungspfad des Verbrennungsmotors.

Eine Weiterbildung der Erfindung sieht vor, dass durch die Leerlaufregelvorrichtung im zweiten Betriebsmodus der integrierende Anteil über Regelungseingriffe in den Regelungspfad des Verbrennungsmotors und über Regelungseingriffe in den Regelungspfad des Elektromotors umgesetzt werden, wobei ein Aufteilungsverhältnis zwischen den Regelungseingriffen in den Regelungspfad des Verbrennungsmotors und den Regelungseingriffen in den Regelungspfad des Elektromotors abhängig ist von einem Dynamikwert, welcher eine zeitliche Änderungsrate des integrierenden Anteils innerhalb eines vorbestimmten zurückliegenden Zeitfensters beschreibt.

Mit anderen Worten wird der Dynamikwert bestimmt, wobei dieser angibt, in welchem Ausmaß sich der integrierende Anteil während des vorbestimmten Zeitfensters in der Vergangenheit zeitlich geändert hat. In Abhängigkeit von dem Dynamikwert wird das Aufteilungsverhältnis bestimmt, nach dem der integrierende Anteil mittels Regelungseingriffen in den Regelungspfad des Verbrennungsmotors und den Regelungseingriffen in den Regelungspfad des Elektromotors im zweiten Betriebsmodus umgesetzt wird.

Dies hat den Vorteil, dass die schnelle Reaktionszeit des Elektromotors erforderlichenfalls auch für den integrierenden Anteil genutzt werden kann, um beispielsweise ein Motorausgehen zu verhindern, während im stationären Betrieb der integrierende Anteil über das Moment des Verbrennungsmotors aufgebracht wird und keine energetisch ungünstigen längerfristigen Eingriffe des Elektromotors im Generator- oder Motormodus erforderlich sind.

Der Dynamikwert kann die zeitliche Änderungsrate des integrierenden Anteils innerhalb eines kurzen zurückliegenden Zeitfensters bewerten. Ein hoher Dynamikwert kann z.B. vorliegen, wenn der integrierende Anteil des Leerlaufreglers schnell auf eine Störgröße reagieren muss, um beispielsweise bei deutlicher Unterdrehzahl ein Motorausgehen zu verhindern. Dagegen kann ein niedriger Dynamikwert vorliegen, wenn der integrierende Anteil des Leerlaufreglers in einem eingeschwungenen Zustand Fehler in der Momentenbilanz ausgleicht und einen zeitlich konstanten oder nahezu konstanten Wert aufweist. Die Ermittlung des Dynamikwertes kann beispielsweise dadurch erfolgen, dass der unaufgeteilte integrierende Anteil des Leerlaufreglers in einen D-T1-Filter oder in einen Filter mit ähnlicher Sprungantwort eingespeist wird, wobei der Dynamikwert der Ausgangswert des Filters ist.

Bei einem Dynamikwert in einem hohen vorbestimmten Bereich können Änderungen des integrierenden Anteils über den Regelungspfad des Elektromotors umgesetzt werden, während bei einem Dynamikwert in einem niedrigen vorbestimmten Bereich Änderungen des integrierenden Anteils über den Regelungspfad des Verbrennungsmotors umgesetzt werden. Bei niedrigem Dynamikwert kann der bestehende integrierende Anteil für den Regelungspfad des Elektromotors beispielsweise über eine Rampe auf Null zurückgeführt werden, wobei der Rampengradient in Abhängigkeit des Dynamikwertes vorbestimmt ist.

Die Erfindung umfasst auch die Leerlaufregelvorrichtung für ein Kraftfahrzeug, welche dazu eingerichtet ist eines der erfindungsgemäßen Verfahren durchzuführen.

Die Erfindung umfasst auch ein Kraftfahrzeug mit einer Leerlaufregelvorrichtung.

Zu der Erfindung gehören auch Weiterbildungen der erfindungsgemäßen Vorrichtung und des erfindungsgemäßen Kraftfahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verfahrens hier nicht noch einmal beschrieben.

Im Folgenden ist ein Ausführungsbeispiel der Erfindung beschrieben. Hierzu zeigt:
- Fig. 1: eine schematische Ansicht eines Kraftfahrzeugs mit einer erfindungsgemäßen Leerlaufregelvorrichtung;
- Fig. 2: eine schematische Ansicht eines Kraftfahrzeugs mit einem Elektromotor und einem Verbrennungsmotor; und
- Fig. 3: eine schematische Darstellung der Regelungspfade.
Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche weitere Beispiele jeweils auch unabhängig voneinander darstellen und damit auch einzeln oder in einer anderen als der gezeigten Kombination als Beispiele anzusehen sind. Der Schutzbereich der Erfindung wird anhand der beigefügten Ansprüche definiert.

In den Figuren sind funktionsgleiche Elemente jeweils mit denselben Bezugszeichen versehen.

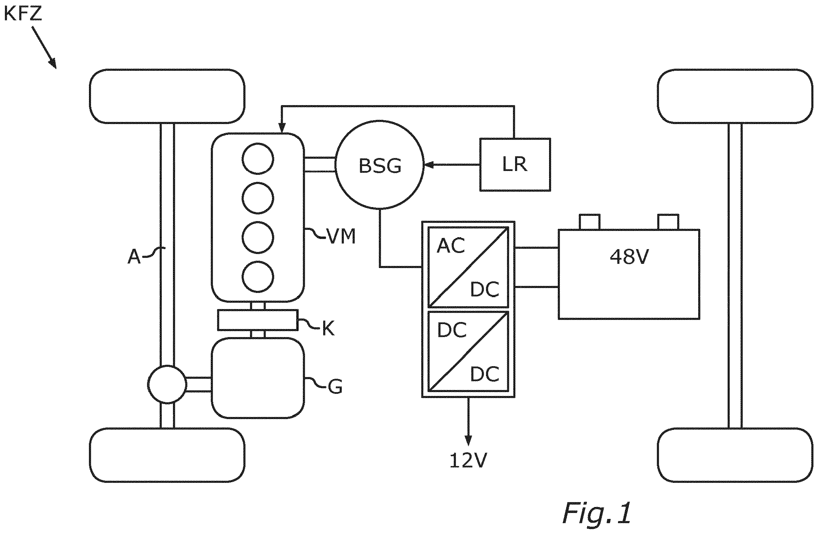

Eine Leerlaufregelvorrichtung LR kann bei allen Hybridsystemen genutzt werden, bei denen eine Verbrennungsmaschine VM beziehungsweise ein Verbrennungsmotor mit einer elektrischen Maschine beziehungsweise einem Elektromotor BSG zusammenwirkt. Gegebenenfalls muss während des Betriebs des Hybridsystems in einem Leerlauf ein Gesamtsolldrehmoment gs gehalten werden, wenn kein angefordertes Gesamtsolldrehmoment gms vorliegt. Ein typisches Beispiel der Nutzung eines Hybridsystems ist ein sogenanntes Hybridfahrzeug, bei dem zum Antrieb sowohl eine Verbrennungsmaschine als auch eine elektrische Maschine genutzt wird. Ein solches Kraftfahrzeug Kfz ist in Fig. 1 schematisch mit einem Fahrgestell und einem Antriebsstrang dargestellt. Der Antriebsstrang weist einen Verbrennungsmotor VM auf, der sein Drehmoment über eine Kupplung K und ein Getriebe G an eine Antriebsachse A des Fahrgestells abgibt. Die Motorwelle der Verbrennungsmaschine VM ist mit einer elektrischen Maschine gekoppelt, die hier als Riemenstartergenerator BSG ausgebildet ist. Damit besteht eine exemplarische Wirkverbindung zwischen der Verbrennungsmaschine VM und der elektrischen Maschine.

Der Elektromotor BSG beziehungsweise der Riemenstartergenerator BSG wird im vorliegenden Beispiel von einer 48 V-Batterie über einen Wechselrichter DC/AC versorgt. Über einen an den Wechselrichter beziehungsweise das 48 V-Netz angeschlossenen Gleichrichter DC/DC kann beispielsweise ein 12 V-Netz zur Versorgung weiterer KFZ-interner Verbraucher erzeugt werden. Das Kraftfahrzeug Kfz kann den Energiespeicher E zur Versorgung des Elektromotors BSG umfassen.

Der Elektromotor BSG hat neben der Antriebsfunktion auch die Funktion einer Lichtmaschine. Er kann sowohl im Zusammenhang mit Ottomotoren als auch mit Dieselmotoren genutzt werden. Mit ihm ist beispielsweise eine Start-Stopp-Funktionalität und damit ein Mild-Hybrid-System realisierbar.

Insbesondere kann eine Drehmomentunterstützung durch die elektrische Maschine, z.B. den Riemenstartergenerator BSG, für den Leerlauf des Verbrennungsmotors VM genutzt werden. Dazu besitzt das Kraftfahrzeug eine Leerlaufregelvorrichtung LR, die auch als Leerlaufregler bezeichnet werden kann. Sie beeinflusst die Momentenerzeugung sowohl des Verbrennungsmotors VM als auch des Elektromotors BSG.

### Die Leerlaufregelvorrichtung

Die Leerlaufregelvorrichtung kann das Gesamtsolldrehmoment gs festlegen, welches sich aus dem Solldrehmoment des Verbrennungsmotors vs und dem Solldrehmoment des Elektromotors es zusammensetzt. In dem vorbestimmten Leerlaufmodus, welcher beispielsweise über eine Stellung des Gaspedals erfasst werden kann, kann das Gesamtsolldrehmoment gs oder das Solldrehmoment des Verbrennungsmotors vs ein vorbestimmtes Leerlaufdrehmoment aufweisen. Das Gesamtsolldrehmoment gs kann ein einzuregelndes Drehmoment darstellen, welches ohne oder vor einer Anforderung des angeforderten Gesamtsolldrehmoments gms durch die Leerlaufregelvorrichtung LR einzuregeln ist. Das Gesamtsolldrehmoment gs kann durch die Leerlaufregelvorrichtung LS über den schnellen vrs und den langsamen Pfad vrl des Verbrennungsmotors und/oder den Regelungspfad des Elektromotors ers eingeregelt werden. Die Einregelung geschieht beispielsweise in Abhängigkeit des Betriebsmodus. Wird ein angefordertes Gesamtsolldrehmoment gms angefordert, kann die Leerlaufregelvorrichtung LR dieses mittels der Regelungseingriffe über die Regelungspfade ers, vrs, vrl einstellen. Ein angefordertes Gesamtsolldrehmoment gms kann beispielsweise ein Gesamtsolldrehmoment für die Durchführung einer Anfahrt des Kraftfahrzeugs sein oder ein Gesamtsolldrehmoment, welches das Absterben des Verbrennungsmotors BSG verhindern soll.

In dem ersten Betriebsmodus kann das angeforderte Gesamtsolldrehmoment gms mittels des zumindest einen Regelungseingriffs nur über den Regelungspfad vr des Verbrennungsmotors eingeregelt werden. Dies kann bedeuten, dass das angeforderte Gesamtsolldrehmoment gms nur durch Eingriffe in Regelungspfade des Verbrennungsmotors vrs, vrl eingeregelt wird. Um einen Eingriff in den schnellen Regelungspfad des Verbrennungsmotors zu vrs ermöglichen, kann es erforderlich sein, dass der Verbrennungsmotor BSG in dem ersten Betriebsmodus mit der ersten Momentenreserve betrieben wird. Die erste Momentenreserve des Verbrennungsmotors BSG kann beispielsweise durch ein Füllungsüberschuss in Kombination mit einem späten Zündzeitpunkt des Zylinders erreicht werden. Ein Eingriff in den schnellen Pfads des Verbrennungsmotors vrs kann dabei eine Änderung des Zeitpunkts darstellen, der zu einem früheren Zündzeitpunkt verschoben wird. Somit kann mit einer relativ geringen Verzögerung oder einer hohen zeitlichen Veränderungsrate das Drehmoment des Verbrennungsmotors erhöht werden.

Im zweiten Betriebsmodus kann es vorgesehen sein, dass das angeforderte Gesamtsolldrehmoment gms mittels zumindest eines Regelungseingriffs über den Regelungspfad des Verbrennungsmotors vr und mittels zumindest eines Regelungseingriffs über den Regelungspfad Elektromotors er eingeregelt wird. Dabei kann der Regelungseingriff über den Regelungspfad des Verbrennungsmotors vr zumindest einen vorbestimmten langsamen Regelungseingriff vrl und der Regelungseingriff in den Regelungspfad des Elektromotors er zumindest einen vorbestimmten schnellen Regelungseingriff ers umfassen. Das angeforderte Gesamtsolldrehmoment gms kann somit über den Verbrennungsmotor VM und dem Elektromotor BSG eingeregelt werden. Der schnelle Regelungseingriff kann dabei beispielsweise über eine Spannungsänderung des Elektromotors BSG erfolgen. Ein schneller Regelungseingriff über den Verbrennungsmotor VM kann beispielsweise im zweiten Betriebsmodus nicht erforderlich sein. Somit kann es möglich sein, dass der Verbrennungsmotor VM vor der Einregelung des angeforderten Gesamtsolldrehmoments gms mit der zweiten Momentenreserve betrieben wird. Die zweite Momentenreserve kann dabei geringer sein als die erste Momentenreserve. Der Zündzeitpunkt kann beispielsweise auch am optimalen Zündzeitpunkt eingestellt sein, wodurch die zweite Momentenreserve beispielsweise 0 betragen kann.

Der Verbrennungsmotor VM kann eine Charakteristik aufweisen, die dazu führt, dass er ohne Momentenreserve nur mit vorbestimmten Solldrehmomenten stabil läuft. Wenn sich das Kraftfahrzeug in dem vorbestimmten Leerlaufmodus befindet kann es sein, dass das Gesamtsolldrehmoment gs kleiner ist als das Drehmoment des Verbrennungsmotors, welches einen stabilen Betrieb ermöglicht. In diesem Fall kann es vorgesehen sein, dass in dem zweiten Betriebsmodus das Solldrehmoment des Elektromotors es ohne Regelungseingriff derart eingeregelt ist, dass es das vorbestimmte Grundgeneratormoment egs aufweist. Der Elektromotor BSG kann beispielsweise in diesem Fall als Generator wirken und ein negatives Drehmoment als Solldrehmoment es aufweisen. Das Solldrehmoment des Verbrennungsmotors vs kann dabei um das vorbestimmte Grundgeneratormoment egs erhöht werden, wodurch beispielsweise das Drehmoment, welches einen stabilen Betrieb des Verbrennungsmotors ermöglicht, erreicht wird.

Es kann auch vorgesehen sein, dass die Leerlaufregelvorrichtung LR das vorbestimmte Grundgeneratormoment egs in Abhängigkeit von dem vorbestimmten Sollarbeitspunkt des Verbrennungsmotors bestimmt. Zu diesem Zweck kann in der Leerlaufregelvorrichtung LR beispielsweise ein Kennfeld gespeichert sein. Mittels des Kennfelds kann die Leerlaufregelvorrichtung LR das Grundgeneratormoment egs derart einstellen, dass der Verbrennungsmotor VM an dem vorbestimmten Sollarbeitspunkt betrieben wird.

In dem vorbestimmten Leerlaufmodus kann es vorgesehen sein, dass der Verbrennungsmotor VM im ersten Betriebsmodus und im zweiten Betriebsmodus mit der gleichen Füllmenge betrieben wird.

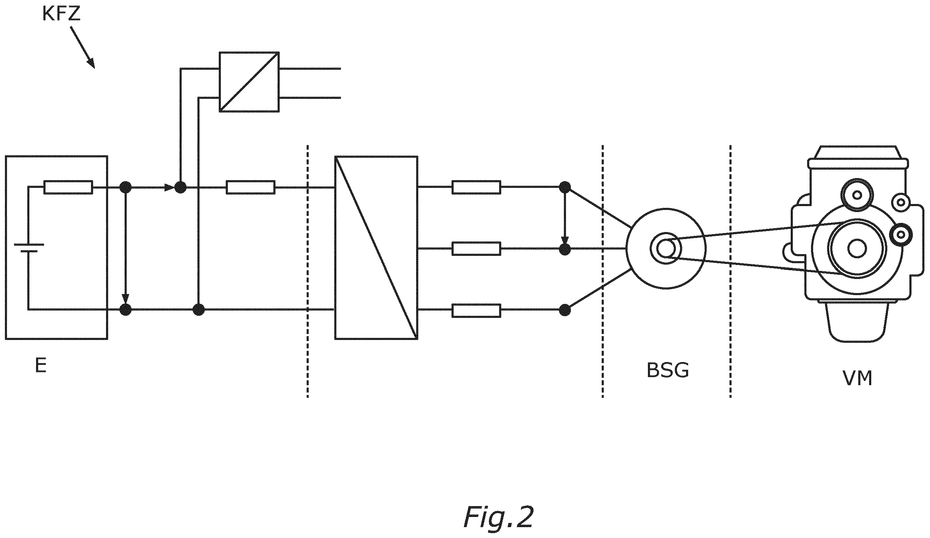

In Fig. 2 wird eine schematische Zeichnung einer Anbindung des Elektromotors BSG an den Verbrennungsmotor VM gezeigt.

Der Betrieb des Elektromotors BSG mit dem vorbestimmten Grundgeneratormoment egs kann zu einer Erzeugung elektrischer Energie führen. Dabei kann es erforderlich sein, elektrische Energie in dem Energiespeicher E zu speichern. Dieser Prozess kann ausgeschlossen sein, wenn durch den Energiespeicher E des Kraftfahrzeugs keine elektrische Energie mehr aufgenommen werden kann. Zu diesem Zweck kann es vorgesehen sein, dass durch die Leerlaufregelvorrichtung LR der Sollladezustand des Energiespeichers E erhöht wird, wenn die Leerlaufregelvorrichtung LR im zweiten Betriebsmodus betrieben wird. Somit kann die Aufnahmekapazität des Energiespeichers E erhöht werden und der zweite Betriebsmodus länger betrieben werden.

Die Leerlaufregelvorrichtung LR kann zu einem Hybridsystem gehören, und in mindestens zwei verschiedenen Betriebsmodi arbeiten, wobei in einem ersten Betriebsmodus die Regelungseingriffe ausschließlich über den Verbrennungsmotor VM erfolgen können und in einem zweiten Betriebsmodus schnelle Regelungseingriffe über den Elektromotor BSG sowie langsame Regelungseingriffe über den Verbrennungsmotor VM erfolgen können.

Im ersten Betriebsmodus kann der Verbrennungsmotor VM eine Momentenreserve aufbauen, um eine schnelle Momentenerhöhung realisieren zu können, während im zweiten Betriebsmodus der Verbrennungsmotor VM ohne Momentenreserve oder mit deutlich reduzierter Momentenreserve arbeiten kann.Die Momentenreserve des Verbrennungsmotors kann im ersten Betriebsmodus durch einen Füllungsüberschuss in Kombination mit einem späten Zündzeitpunkt dargestellt werden. Der Verbrennungsmotor VM kann im zweiten Betriebsmodus mit einem für die aktuelle Füllung optimalen Zündzeitpunkt betrieben werden. Im zweiten Betriebsmodus kann der Elektromotor BSG mindestens ein vorbestimmtes Grundgeneratormoment egs ohne Regelungseingriffe aufnehmen und der Verbrennungsmotor VM ein entsprechendes erhöhtes Moment abgeben. Das Grundgeneratormoment egs kann so gewählt werden, dass der Verbrennungsmotor VM in einem hinsichtlich der Stabilität des Verbrennungsvorganges günstigen Arbeitspunkt arbeitet. Dies erlaubt auch eine optimierte Nockenwellenstrategie, mit hieraus folgenden weiteren Verbrauchsvorteilen. Das Grundgeneratormoment egs kann so gewählt werden, dass der Verbrennungsmotor VM in einem bezüglich Akustik oder Vibrationen günstigen vorbestimmten Arbeitspunkt arbeitet. Das Grundgeneratormoment egs kann so gewählt werden, dass der Verbrennungsmotor EM im ersten und zweiten Betriebsmodus stationär mit derselben Füllung betrieben werden kann. Dieses Grundgeneratormoment egs kann auch für Sicherheit sorgen, falls das Hochvoltsystem ausfällt und in den ersten Betriebsmodus geschaltet werden muss, weil in diesem Fall genügend Füllung vorhanden ist, um die Leerlaufdrehzahl zu halten. Im zweiten Modus kann eine Niederspannungsbatterie aus einem Hochvoltsystem auf einen höheren Ladezustand aufgeladen werden als im ersten Betriebsmodus, insbesondere wenn der Ladezustand des Hochvoltsystems eine vorbestimmte Schwelle überschreitet.

Wenn der Ladezustand des Hochvoltsystems zu sehr ansteigt, kann ein Aufladen der 12V Batterie aktiviert werden, um zu vermeiden, dass die Leerlaufregelvorrichtung LR wieder in den ersten Betriebsmodus schalten muss.

Der Betrieb der Leerlaufregelvorrichtung LR in dem ersten Betriebsmodus oder dem zweiten Betriebsmodus kann von vorbestimmten Betriebszuständen des Kraftfahrzeugs abhängig sein. So können im ersten Betriebsmodus vorbestimmte Betriebszustände und dem zweite Betriebsmodus vorbestimmte Betriebszustände zugewiesen sein. Die Leerlaufregelvorrichtung LR kann dabei in Abhängigkeit des Betriebszustands des Kraftfahrzeugs den jeweiligen Betriebsmodus einstellen.

Bedingungen für den Betrieb der Leerlaufregelvorrichtung im zweiten Betriebsmodus

Die Leerlaufregelvorrichtung LR kann vorzugsweise im zweiten Betriebsmodus arbeiten, wenn ein Ladezustand eines oder mehrerer elektrischer Energiespeicher E innerhalb eines vorbestimmten Bereiches liegt.

Die Leerlaufregelvorrichtung LR kann vorzugsweise im zweiten Betriebsmodus arbeiten, wenn eine erhöhte Momentenabgabe des Verbrennungsmotors VM für den Betrieb eines oder mehrerer mechanisch angetriebener Nebenaggregate und/oder für die Versorgung elektrischer Verbraucher über den Elektromotor erforderlich ist. Eines der mechanisch angetriebenen Nebenaggregate kann ein Klimakompressor sein.

Die Leerlaufregelvorrichtung LR kann beispielsweise nur im zweiten Betriebsmodus arbeiten, wenn keine vorbestimmte erhöhte Abgastemperatur für das Aufheizen eines Abgasbehandlungssystems erforderlich ist. Der zweite Betriebsmodus kann beispielsweise nur in vorbestimmten Zuständen des Antriebsstranges aktiviert werden [z.B. offener Antriebsstrang oder definierte Gänge].Der zweite Betriebsmodus kann beispielsweise nur aktiviert werden, wenn seit dem Start des Verbrennungsmotors VM eine vorbestimmte Zeit abgelaufen ist. Eine Aktivierung des zweiten Betriebsmodus kann beispielsweise nur zu Beginn einer Aktivierungsphase des Leerlaufreglers erfolgen, um mögliche spürbare Auswirkung beim Übergang zwischen den Betriebsmodi zu minimieren.

Die Leerlaufregelvorrichtung LR kann den Betriebsmodus in Abhängigkeit von vorbestimmten Betriebszuständen des Kraftfahrzeugs auswählen. Exemplarisch werden mögliche Betriebszustände angeführt. Dabei kann es sich um eine Anfahrsituation, ein Zustand eines möglichen Motorausgehens oder ein Leerlaufzustand handeln.

### Einsatz als Anfahrunterstützung

Der Leerlaufregler LR kann aktiviert oder aktiv gehalten werden und vorzugsweise ein Übergang in den zweiten Betriebsmodus erfolgen, wenn eine Anfahrsituation erkannt wird. Dabei kann der Leerlaufregler LR während der Anfahrsituation die Motordrehzahl auf eine gegenüber dem Leerlauf erhöhte Solldrehzahl regeln.

### Einsatz als Motorausgehschutz

Ein Übergang in den zweiten Betriebsmodus kann beispielsweise erfolgen, wenn das Risiko eines Motorausgehens erkannt wird. Das Risiko eines Motorausgehens kann beispielsweise daran erkannt werden, dass die Motordrehzahl um einen vorbestimmten Betrag unterhalb einer Solldrehzahl liegt und/oder ein Motordrehzahlgradient in negative Richtung einen vorbestimmten Betrag überschreitet (dies kann z.B. als Unterdrehzahlschwelle in Abhängigkeit vom Drehzahlgradienten realisiert werden). Nach einem Übergang in den zweiten Betriebsmodus kann wegen eines erkannten Risikos des Motorausgehens eine Rückkehr in den ersten Betriebsmodus erfolgen, wenn die Bedingungen für ein mögliches Motorausgehen für eine vorbestimmte Zeit nicht mehr vorliegen.

Bei einem bevorstehenden Motorausgehen kann es vorgesehen sein, dass kein Übergang in den zweiten Betriebsmodus erfolgt, wenn der Antriebsstrang geschlossen ist und der Fahrer die Bremse betätigt. Es kann vorgesehen sein, dass keine Regelungseingriffe über die E-Maschine erfolgen, wenn die Motordrehzahl eine vorbestimmte Schwelle unterschreitet. Dies dient dem Schutz eines Zweimassenschwungrades (ZMS), das aufgrund von Resonanzen zerstört werden kann, falls die Drehzahl längere Zeit in einem bestimmten niedrigen Bereich unterhalb der Leerlaufdrehzahl liegt.

Es kann vorgesehen sein, dass sich Parameter, welche durch die Leerlaufregelvorrichtung LR verwendet werden abhängig sind von dem jeweiligen Betriebsmodus. Die Parameter können beispielsweise die Reglerkonstanten eines proportionalen, differenzierenden oder integrierenden Regleranteils betreffen. Um einen fließenden Übergang zwischen den Betriebsmodi bei einem Wechsel des Betriebsmodus zu ermöglichen, kann es vorgesehen sein, dass die Leerlaufregelvorrichtung LR bei einem Wechsel des Betriebsmodus in einem vorbestimmten Übergangsmodus betrieben wird, wobei sich die von der Leerlaufregelvorrichtung LR verwendeten Werte der Momentenreserve und/oder der Parameter stetig verändern. Es kann beispielsweise vorgesehen sein, dass konkrete Werte wie beispielsweise Momentenreserve oder Grenzen zulässiger Bereiche der Parameter sich während des Übergangsmodus kontinuierlich von dem Wert des anfänglichen Betriebsmodus zu dem Wert des folgenden Betriebsmodus ändern.

### Übergänge zwischen den zwei Betriebsmodi

Beim Übergang zwischen dem ersten und zweiten Betriebsmodus kann ein kontinuierliches Überblenden zwischen den Regelungseingriffen auf Verbrennungsmotor und Elektromotor erfolgen. Es kann beim Übergang zwischen dem ersten und zweiten Betriebsmodus ein kontinuierliches Überblenden zwischen den Werten des Grundgeneratormoments und der Momentenreserve des Verbrennungsmotors in den beiden Modi erfolgen. Ein Umschalten vom zweiten in den ersten Betriebsmodus kann ohne kontinuierlichen Übergang erfolgen, wenn ein Fehler des Elektromotors oder eines Hochvoltsystems vorliegt, an welches der Elektromotor angeschlossen ist (Hochvolt beinhaltet in diesem Sinne eine Spannung > 12V, z. B. 48V)

### Reglerstruktur

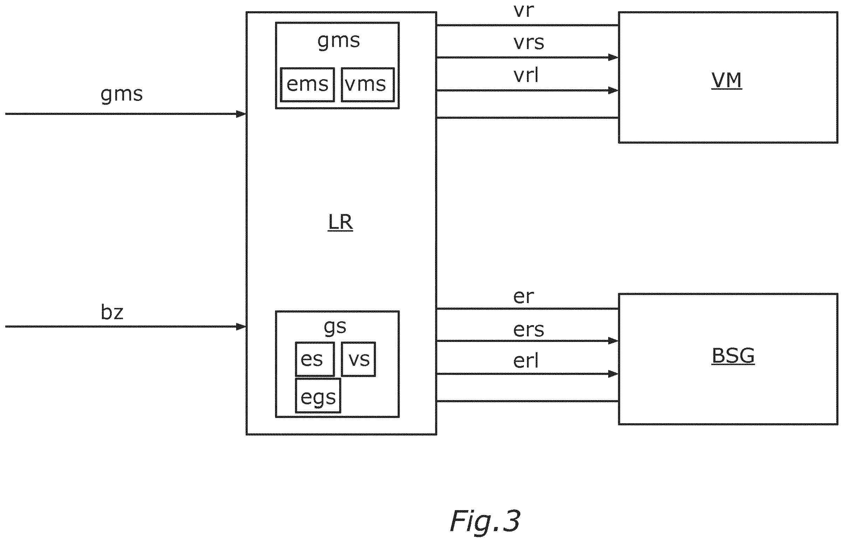

Fig. 3 zeigt ein Schema einer möglichen Reglerstruktur. Die Leerlaufregelvorrichtung LR kann das Gesamtsolldrehmoment gs bestimmen, welches sich aus dem Solldrehmoment des Elektromotors und dem Solldrehmoment des Verbrennungsmotors zusammensetzt. Über den Regelungspfad des Verbrennungsmotors vr und den Regelungspfad des Elektromotors er kann die Leerlaufregelvorrichtung die Solldrehmomente vs, es einregeln. Die Regelungspfade er, vr können die langsamen vrl und die schnellen Regelungspfade ers, vrs umfassen. Die Leerlaufregelvorrichtung LR kann ein Signal zu dem Betriebszustand des Kraftfahrzeugs bz empfangen und daraufhin den jeweiligen Betriebszustand aktivieren. Die Leerlaufregelvorrichtung LR kann das angeforderte Gesamtsolldrehmoment gms empfangen und die entsprechenden Solldrehmomente des Elektromotors nach dem Regelungseingriff ems und des Verbrennungsmotors vms bestimmen. Um das angeforderte Gesamtsolldrehmoment gms einzuregeln kann die Leerlaufregelvorrichtung die Regelungseingriffe in die Regelungspfade vr, er durchführen.

Es kann vorgesehen sein, dass durch die Leerlaufregelvorrichtung LR die schnellen Regelungseingriffe im zweiten Betriebsmodus zeitsynchron und im ersten Betriebsmodus winkelsynchron berechnet werden. Durch die Leerlaufregelvorrichtung LR kann im zweiten Betriebsmodus ein proportionaler und/oder differenzierender Anteil über den zumindest einen Regelungseingriff in den Regelungspfad des Elektromotors er umgesetzt werden.

Im zweiten Betriebsmodus kann ein integrierender Anteil über den zumindest einen Regelungseingriff in den Regelungspfad des Verbrennungsmotors vr umgesetzt werden und der integrierende Anteil über Regelungseingriffe in den Regelungspfad des Verbrennungsmotors vr und den Regelungspfad des Elektromotors er umgesetzt werden, wobei das Aufteilungsverhältnis des integrierenden Anteils abhängig ist von einem Dynamikwert.

Abhängig davon, ob die Leerlaufregelvorrichtung LR im ersten oder zweiten Betriebsmodus arbeitet, kann die Leerlaufregelvorrichtung LR unterschiedliche Parametersätze verwenden. Schnellen Regelungseingriffe im zweiten Betriebsmodus können zeitsynchron berechnet werden (d.h. mit einer konstanten Wiederholrate, beispielsweise alle 10ms), während sie im ersten Betriebsmodus winkelsynchron berechnet werden (d.h. Wiederholrate proportional zur Drehzahl des Verbrennungsmotors VM, insbesondere mit einer segmentsynchronen Berechnung der schnellen Regelungseingriffe) . Eine Segmentdauer ist dabei eine Dauer eines Arbeitsspieles des Verbrennungsmotors, also zwei Umdrehungen pro Zylinderanzahl. Im zweiten Betriebsmodus kann ein proportionaler und/oder differenzierender Anteil des Leerlaufreglers über den Elektromotor umgesetzt werden. Im zweiten Betriebsmodus kann ein integrierender Anteil des Leerlaufreglers über den Verbrennungsmotor VM umgesetzt werden und ein integrierender Anteil des Leerlaufreglers LR teilweise über den Verbrennungsmotor VM und teilweise über den Elektromotor BSG umgesetzt werden, wobei unter konstanten Bedingungen langfristig der gesamte integrierende Anteil des Leerlaufreglers über den Verbrennungsmotor VM umgesetzt wird. Im zweiten Betriebsmodus kann die Dynamik des gesamten integrierenden Anteils bewertet werden und bei hoher Dynamik die Änderung des integrierenden Anteils über den Elektromotor BSG umgesetzt werden. Bei geringer Dynamik kann der über den Elektromotor BSG umgesetzte Anteil gegen Null geführt werden. Die Bewertung der Dynamik des gesamten integrierenden Anteils kann beispielsweise über einen D-T1-Filter oder einen Algorithmus mit ähnlicher Sprungantwort erfolgen. Eine Rückführung des über die E-Maschine BSG umgesetzten Anteils des integrierenden Anteils auf Null kann mittels Rampen erfolgen, wobei ein Gradient in Abhängigkeit von einem Dynamikwert des gesamten integrierenden Anteils vorbestimmt ist.

Durch die Erfindung wird ein Verfahren zur Verfügung gestellt, das durch einen koordinierten Einsatz der Leerlaufregelvorrichtung durch Verbrennungsmotor VM und E-Maschine BSG optimiert ist. Dabei soll das Verfahren in allen Betriebssituation die Leerlaufregelung ermöglichen, wobei je nach Situation der jeweils beste Betriebsmodus wirksam wird. Das Verfahren kann gleicherweise zu einer optimierten Anfahrunterstützung sowie zu einem optimierten Motorausgehschutz eingesetzt werden. Die Erfindungsmeldung soll bei Ottomotoren ebenfalls einen stabilen Motorlauf unter verbrauchsoptimalen Bedingungen sicherzustellen.

Insgesamt zeigt das Beispiel, wie durch die Erfindung ein koordinierter Einsatz der Leerlaufregelvorrichtung LR durch einen Verbrennungsmotor und einen Elektromotor bereitgestellt wird, wobei in Abhängigkeit von einer vorbestimmten Betriebssituation der beste Betriebsmodus gewählt wird.

### Bezugszeichenliste

- Kfz: Kraftfahrzeug
- A: Antriebsachse
- BSG: Elektromotor
- ems: Solldrehmoment des Elektromotors mit Regelungseingriff
- es: Solldrehmoment des Elektromotors ohne Regelungseingriff
- gs: Gesamtsolldrehmoment
- egs: Grundgeneratormoment
- gms: angefordertes Gesamtsolldrehmoment
- er: Regelungspfad des Elektromotors
- vr: Regelungspfad des Verbrennungsmotors
- ers: schneller Regelungseingriff über den Elektromotor
- vrs: schneller Regelungseingriff über den Verbrennungsmotor
- erl: langsamer Regelungseingriff über den Elektromotor
- vrl: langsamer Regelungseingriff über den Verbrennungsmotor
- G: Getriebe
- K: Kupplung
- LR: Leerlaufregelvorrichtung
- vms: Solldrehmoment des Verbrennungsmotors mit Regelungseingriff
- vs: Solldrehmoment des Verbrennungsmotors ohne Regelungseingriff
- VM: Verbrennungsmotor
- bz: Signal zum Betriebszustand des Kraftfahrzeugs
- E: elektrischer Energiespeicher

## Patentansprüche

1. Verfahren zum Betreiben einer Leerlaufregelvorrichtung (LR) für ein Kraftfahrzeug (Kfz), wobei durch die Leerlaufregelvorrichtung (LR)
- ein Gesamtsolldrehmoment (gs) umfassend ein Solldrehmoment eines Elektromotors (es) und ein Solldrehmoment eines mit dem Elektromotor zusammenwirkenden Verbrennungsmotors (vs) festgelegt wird, und
- die Solldrehmomente (es,vs) mittels jeweiliger Regelungspfade (er,vr) in dem Elektromotor (BSG) und dem Verbrennungsmotor (VM) eingeregelt werden,
- in einem ersten Betriebsmodus ein angefordertes Gesamtsolldrehmoment (gms) mittels zumindest eines Regelungseingriffs (vrl, vrs) nur über den Regelungspfad des Verbrennungsmotors eingeregelt (vr) wird,
- in einem zweiten Betriebsmodus das angeforderte Gesamtsolldrehmoment (gms) mittels zumindest eines Regelungseingriffs (vrl, vrs) über den Regelungspfad des Verbrennungsmotors (vrl) und mittels zumindest eines Regelungseingriffs (erl, ers) über den Regelungspfad des Elektromotors (er) eingeregelt wird, wobei die Regelungseingriffe (vrl, vrs) über den Regelungspfad des Verbrennungsmotors (vr) zumindest einen vorbestimmten langsamen Regelungseingriff (vrl) umfassen und die Regelungseingriffe in den Regelungspfad des Elektromotors (er) zumindest einen vorbestimmten schnellen Regelungseingriff (ers) umfassen, der mit einer höheren zeitlichen Änderungsrate eingreift, als der zumindest eine vorbestimmte langsame Regelungseingriff über den Verbrennungsmotor (vrs).
**dadurch gekennzeichnet, dass**
in dem zweiten Betriebsmodus
- das Solldrehmoment des Elektromotors ohne Regelungseingriff (es) mindestens ein vorbestimmtes Grundgeneratormoment (egs) aufweist, und
- das Solldrehmoment des Verbrennungsmotors ohne Regelungseingriff (vs) mindestens das Grundgeneratormoment (egs) als Solldrehmoment aufweist, wenn sich das Kraftfahrzeug (Kfz) in einem vorbestimmten Leerlaufmodus befindet.

2. Verfahren nach Anspruch 1, **dadurch gekennzeichnet, dass** durch die Leerlaufregelvorrichtung (LR)
- der Verbrennungsmotor (VM) ohne Regelungseingriff (vrl, vrs) in dem ersten Betriebsmodus mit einer vorbestimmten ersten Momentenreserve betrieben wird, und
- der Verbrennungsmotor (VM) ohne Regelungseingriff (vrl, vrs) in dem zweiten Betriebsmodus durch die Leerlaufregelvorrichtung (LR) entweder ohne eine Momentenreserve oder mit einer vorbestimmten zweiten Momentenreserve betrieben wird, wobei die vorbestimmte zweite Momentenreserve kleiner ist als die vorbestimmte erste Momentenreserve.

3. Verfahren nach einem der Ansprüche 1 bis 2, **dadurch gekennzeichnet, dass** durch die Leerlaufregelvorrichtung (LR) das vorbestimmte Grundgeneratormoment (egs) in Abhängigkeit eines vorbestimmten Sollarbeitspunkts des Verbrennungsmotors bestimmt wird.

4. Verfahren nach einem der vorhergehenden Ansprüche, **dadurch gekennzeichnet, dass** der Verbrennungsmotor (VM) im ersten Betriebsmodus und im zweiten Betriebsmodus mit einer gleichen Füllung pro Verbrennungszyklus betrieben wird, wenn sich das Kraftfahrzeug (Kfz) in dem vorbestimmten Leerlaufmodus befindet.

5. Verfahren nach einem der vorhergehenden Ansprüche, **dadurch gekennzeichnet, dass** durch die Leerlaufregelvorrichtung (LR) ein Sollladezustand eines elektrischen Energiespeichers (E) festgelegt wird, wobei der Sollladezustand in dem zweiten Betriebsmodus höher ist als im ersten Betriebsmodus.

6. Verfahren nach einem der vorhergehenden Ansprüche, **dadurch gekennzeichnet, dass** dem ersten Betriebsmodus und dem zweiten Betriebsmodus jeweilige vorbestimmte Betriebszustände des Kraftfahrzeugs zugewiesen sind, und die Leerlaufregelvorrichtung (LR) in Abhängigkeit von den vorbestimmten Betriebszuständen des Kraftfahrzeugs im ersten Betriebsmodus oder im zweiten Betriebsmodus arbeitet.

7. Verfahren nach Anspruch 6, **dadurch gekennzeichnet, dass** der zweite Betriebsmodus aktiviert wird oder aktiv gehalten wird, wenn eine vorbestimmte Anfahrsituation des Kraftfahrzeugs und/oder eine vorbestimmte Situation eines bevorstehen Ausgehens des Verbrennungsmotors (VM) erkannt wird.

8. Verfahren nach einem der vorhergehenden Ansprüche, **dadurch gekennzeichnet, dass** durch die Leerlaufregelvorrichtung (LR) Parameter verwendet werden, welche abhängig sind von dem jeweiligen Betriebsmodus.

9. Verfahren nach Anspruch 8, **dadurch gekennzeichnet, dass** die Leerlaufregelvorrichtung (LR) bei einem Wechsel von einem Betriebsmodus in den jeweils anderen Betriebsmodus in einem vorbestimmten Übergangsmodus betrieben wird, wobei während des Übergangsmodus sich die von der Leerlaufregelvorrichtung (LR) verwendeten Werte der Momentenreserve und/oder der Parameter stetig von denen des vor dem Wechsel eingestellten Betriebsmodus zu denen des nach dem Wechsel eingestellten Betriebsmodus ändern.

10. Verfahren nach einem der vorhergehenden Ansprüche, **dadurch gekennzeichnet, dass** durch die Leerlaufregelvorrichtung (LR) die schnellen Regelungseingriffe im zweiten Betriebsmodus zeitsynchron und im ersten Betriebsmodus winkelsynchron mit einem Winkel eines Antriebselements des Kraftfahrzeugs berechnet werden.

11. Verfahren nach einem der vorhergehenden Ansprüche, **dadurch gekennzeichnet, dass** durch die Leerlaufregelvorrichtung (LR) im zweiten Betriebsmodus ein proportionaler und/oder differenzierender Anteil über den zumindest einen Regelungseingriff in den Regelungspfad des Elektromotors (er) umgesetzt wird.

12. Verfahren nach einem der vorhergehenden Ansprüche, **dadurch gekennzeichnet, dass** durch die Leerlaufregelvorrichtung (LR) im zweiten Betriebsmodus ein integrierender Anteil über den zumindest einen Regelungseingriff in den Regelungspfad des Verbrennungsmotors (vr) umgesetzt wird.

13. Verfahren nach Anspruch 12, **dadurch gekennzeichnet, dass** durch die Leerlaufregelvorrichtung (LR) im zweiten Betriebsmodus der integrierende Anteil über Regelungseingriffe in den Regelungspfad des Verbrennungsmotors (vr) und den Regelungspfad des Elektromotors (er) umgesetzt wird, wobei ein Aufteilungsverhältnis des integrierenden Anteils abhängig ist von einem Dynamikwert.

14. Leerlaufregelvorrichtung (LR) für ein Kraftfahrzeug (Kfz), eingerichtet zur Durchführung eines der vorhergehenden Verfahren.

15. Kraftfahrzeug (Kfz) mit einer Leerlaufregelvorrichtung (LR) nach Anspruch 14.

## Claims

1. A method for operating an idling control device (LR) for a motor vehicle (Kfz), wherein the following actions are carried out by the idling control device (LR):
- a total setpoint torque (gs) comprising a setpoint torque of an electric motor (es) and a setpoint torque of an internal combustion engine (vs) interacting with the electric motor is specified, and
- the setpoint torques (es, vs) in the electric motor (BSG) and the internal combustion engine (VM) are set by means of respective control paths (er, vr),
- in a first operating mode, a requested total setpoint torque (gms) is only set by means of at least one control intervention (vrl, vrs) via the control path of the internal combustion engine (vr),
- in a second operating mode, the requested total setpoint torque (gms) is set by means of at least one control intervention (vrl, vrs) via the control path of the internal combustion engine (vrl) and by means of at least one control intervention (erl, ers) via the control path of the electric motor (er), wherein the control interventions (vrl, vrs) via the control path of the internal combustion engine (vr) comprise at least one predetermined slow control intervention (vrl) and the control interventions in the control path of the electric motor (er) comprise at least one predetermined fast control intervention (ers) which engages with a higher temporal rate of change than the at least one predetermined slow control intervention via the internal combustion engine (vrs),
**characterised in that**, in the second operating mode,
- the setpoint torque of the electric motor without a control intervention (es) has at least one predetermined basic generator torque (egs), and
- the setpoint torque of the internal combustion engine without a control intervention (vs) has at least the basic generator torque (egs) as the setpoint torque, if the motor vehicle (Kfz) is in a predetermined idling mode.

2. The method according to Claim 1, **characterised in that** the following action is carried out by the idling control device (LR):
- the internal combustion engine (VM) is operated without a control intervention (vrl, vrs) in the first operating mode with a predetermined first torque reserve, and
- the internal combustion engine (VM) is operated without a control intervention (vrl, vrs) in the second operating mode by the idling control device (LR) either without a torque reserve or with a predetermined second torque reserve, wherein the predetermined second torque reserve is smaller than the predetermined first torque reserve.

3. The method according to any one of Claims 1 to 2, **characterised in that** the predetermined basic generator torque (egs) is determined by the idling control device (LR) as a function of a predetermined setpoint operating point of the internal combustion engine.

4. The method according to any one of the preceding claims, **characterised in that** the internal combustion engine (VM) is operated in the first operating mode and in the second operating mode with the same filling per combustion cycle if the motor vehicle (Kfz) is in the predetermined idling mode.

5. The method according to any one of the preceding claims, **characterised in that** a setpoint state of charge of an electrical energy store (E) is specified by the idling control device (LR), wherein the setpoint state of charge in the second operating mode is higher than in the first operating mode.

6. The method according to any one of the preceding claims, **characterised in that** the first operating mode and the second operating mode are assigned respective predetermined operating states of the motor vehicle, and the idling control device (LR) works as a function of the predetermined operating states of the motor vehicle in the first operating mode or in the second operating mode.

7. The method according to Claim 6, **characterised in that** the second operating mode is activated or is kept active, if a predetermined starting situation of the motor vehicle and/or a predetermined situation of an imminent shutdown of the internal combustion engine (VM) is recognized.

8. The method according to any one of the preceding claims, **characterised in that** parameters are used by the idling control device (LR), which are dependent on the respective operating mode.

9. The method according to Claim 8, **characterised in that** the idling control device (LR) is operated in a predetermined transition mode during a change from one operating mode to the other operating mode in each case, wherein during the transition mode the values of the torque reserve and/or the parameters used by the idling control device (LR) change constantly from those of the operating mode adjusted prior to the change to those of the operating mode adjusted following the change.

10. The method according to any one of the preceding claims, **characterised in that** the fast control interventions are calculated in a time-synchronous manner in the second operating mode and in the first operating mode in an angle-synchronous manner with an angle of a drive element of the motor vehicle, by the idling control device (LR).

11. The method according to any one of the preceding claims, **characterised in that**, in the second operating mode, a proportional and/or differentiating component is converted via the at least one control intervention in the control path of the electric motor (er), by the idling control device (LR).

12. The method according to any one of the preceding claims, **characterised in that**, in the second operating mode, an integrating component is converted via the at least one control intervention in the control path of the internal combustion engine (vr) by the idling control device (LR).

13. The method according to Claim 12, **characterised in that**, in the second operating mode, the integrating component is converted by the idling control device (LR) via control interventions in the control path of the internal combustion engine (vr) and the control path of the electric motor (er), wherein a division ratio of the integrating component is dependent on a dynamic value.

14. An idling control device (LR) for a motor vehicle (Kfz), adapted to carry out one of the preceding methods.

15. A motor vehicle (Kfz) having an idling control device (LR) according to Claim 14.

## Revendications

1. Procédé d'exploitation d'un dispositif de réglage de ralenti (LR) pour un véhicule automobile (Kfz), le dispositif de réglage de ralenti (LR)
- établissant un couple de consigne total (gs) comprenant un couple de consigne d'un moteur électrique (es) et un couple de consigne d'un moteur à combustion interne (vs) coopérant avec le moteur électrique, et
- les couples de consigne (es, vs) étant réglés au moyen de chemins de réglage respectifs (er, vr) dans le moteur électrique (BSG) et le moteur à combustion interne (VM),
- dans un premier mode d'exploitation, un couple de consigne total demandé (gms) étant réglé (vr) au moyen d'au moins une intervention de réglage (vrl, vrs) uniquement via le chemin de réglage du moteur à combustion interne,
- dans un deuxième mode d'exploitation, le couple de consigne total demandé (gms) étant réglé au moyen d'au moins une intervention de réglage (vrl, vrs) via le chemin de réglage du moteur à combustion interne (vrl) et au moyen d'au moins une intervention de réglage (erl, ers) via le chemin de réglage du moteur électrique (er), les interventions de réglage (vrl, vrs) via le chemin de réglage du moteur à combustion interne (vr) comprenant au moins une intervention de réglage lente prédéterminée (vrl) et les interventions de réglage dans le chemin de réglage du moteur électrique (er) comprenant au moins une intervention de réglage rapide prédéterminée (ers) qui intervient avec un taux de changement temporel plus élevé que l'au moins une intervention de réglage lente prédéterminée via le moteur à combustion interne (vrs),
**caractérisé en ce que**
dans le deuxième mode d'exploitation
- le couple de consigne du moteur électrique sans intervention de réglage (es) présente au moins un couple générateur de base prédéterminé (egs), et
- le couple de consigne du moteur à combustion interne sans intervention de réglage (vs) présente au moins le couple générateur de base (egs) en tant que couple de consigne lorsque le véhicule automobile (Kfz) se trouve dans un mode de ralenti prédéterminé.

2. Procédé selon la revendication 1, **caractérisé en ce que** le dispositif de réglage de ralenti (LR)
- exploite le moteur à combustion interne (VM) sans intervention de réglage (vrl, vrs) dans le premier mode d'exploitation avec une première réserve de couple prédéterminée, et
- le moteur à combustion interne (VM) est exploité sans intervention de réglage (vrl, vrs) dans le deuxième mode d'exploitation par le dispositif de réglage de ralenti (LR) soit sans réserve de couple, soit avec une deuxième réserve de couple prédéterminée, la deuxième réserve de couple prédéterminée étant inférieure à la première réserve de couple prédéterminée.

3. Procédé selon l'une quelconque des revendications 1 à 2, **caractérisé en ce que** le dispositif de réglage de ralenti (LR) détermine le couple générateur de base prédéterminé (egs) en fonction d'un point de fonctionnement de consigne prédéterminé du moteur à combustion interne.

4. Procédé selon l'une quelconque des revendications précédentes, **caractérisé en ce que** le moteur à combustion interne (VM) est exploité dans le premier mode d'exploitation et dans le deuxième mode d'exploitation avec un même remplissage par cycle de combustion lorsque le véhicule automobile (Kfz) se trouve dans le mode de ralenti prédéterminé.

5. Procédé selon l'une quelconque des revendications précédentes, **caractérisé en ce qu'**un état de charge de consigne d'un accumulateur d'énergie électrique (E) est établi par le dispositif de réglage de ralenti (LR), l'état de charge de consigne étant plus élevé dans le deuxième mode d'exploitation que dans le premier mode d'exploitation.

6. Procédé selon l'une quelconque des revendications précédentes, **caractérisé en ce que** des états d'exploitation prédéterminés respectifs du véhicule automobile sont attribués au premier mode d'exploitation et au deuxième mode d'exploitation, et le dispositif de réglage de ralenti (LR) fonctionne dans le premier mode d'exploitation ou dans le deuxième mode d'exploitation en fonction des états d'exploitation prédéterminés du véhicule automobile.

7. Procédé selon la revendication 6, **caractérisé en ce que** le deuxième mode d'exploitation est activé ou maintenu actif lorsqu'une situation de démarrage prédéterminée du véhicule automobile et/ou une situation prédéterminée d'extinction imminente du moteur à combustion interne (VM) est détectée.

8. Procédé selon l'une quelconque des revendications précédentes, **caractérisé en ce que** le dispositif de réglage de ralenti (LR) utilise des paramètres qui dépendent du mode d'exploitation respectif.

9. Procédé selon la revendication 8, **caractérisé en ce que** le dispositif de réglage de ralenti (LR) est exploité dans un mode de transition prédéterminé lors d'un passage d'un mode d'exploitation à l'autre mode d'exploitation respectif, les valeurs de la réserve de couple et/ou des paramètres utilisées par le dispositif de réglage de ralenti (LR) changeant continuellement de celles du mode d'exploitation réglé avant le changement à celles du mode d'exploitation réglé après le changement pendant le mode de transition.

10. Procédé selon l'une quelconque des revendications précédentes, **caractérisé en ce que** le dispositif de réglage de ralenti (LR) calcule les interventions de réglage rapide en synchronisation temporelle dans le deuxième mode d'exploitation et en synchronisation angulaire dans le premier mode d'exploitation avec un angle d'un élément d'entraînement du véhicule automobile.

11. Procédé selon l'une quelconque des revendications précédentes, **caractérisé en ce que** le dispositif de réglage de ralenti (LR) met en oeuvre, dans le deuxième mode d'exploitation, une partie proportionnelle et/ou différentielle via l'au moins une intervention de réglage dans le chemin de réglage du moteur électrique (er).

12. Procédé selon l'une quelconque des revendications précédentes, **caractérisé en ce que** le dispositif de réglage du ralenti (LR) met en oeuvre, dans le deuxième mode d'exploitation, une partie d'intégration via l'au moins une intervention de réglage dans le chemin de réglage du moteur à combustion interne (vr).

13. Procédé selon la revendication 12, **caractérisé en ce que** le dispositif de réglage de ralenti (LR) met en oeuvre, dans le deuxième mode d'exploitation, la partie d'intégration via des interventions de réglage dans le chemin de réglage du moteur à combustion interne (vr) et le chemin de réglage du moteur électrique (er), un rapport de répartition de la partie d'intégration dépendant d'une valeur dynamique.

14. Dispositif de réglage de ralenti (LR) pour un véhicule automobile (Kfz), adapté pour réaliser l'un des procédés précédents.

15. Véhicule automobile (Kfz) avec un dispositif de réglage de ralenti (LR) selon la revendication 14.
